# EUROPEAN PATENT SPECIFICATION

(11) **EP 1 148 072 B1**
(45) Date of publication and mention of the grant of the patent: **05.08.2009**
(21) Application number: 01108598.2
(22) Date of filing: 05.04.2001
(51) Int. Cl.: C08F 216/14, C08F 214/00, C08F 214/26

(54) **Fluoroelastomers**
Fluorkautschuke
Elastomères fluorés

(30) Priority: 21.04.2000 IT MI000901
(43) Date of publication of application: 24.10.2001
(73) Proprietor: Solvay Solexis S.p.A., 20121 Milano (IT)
(72) Inventor: Navarrini, Walter, Boffalora Ticino, Milano (IT)
(74) Representative: Benvenuti, Federica

(56) References cited:
- WO-A-99/48939

## Description

The present invention relates to fluorovinylethers, the process for preparing them and the polymers obtainable therefrom.

It is well known that perfluoroalkylvinylethers are used as monomers for the olefin copolymerization, specifically tetrafluoroethylene, vinylidene fluoride, chlorotrifluoroethylene (CTFE), hexafluoropropene. The introduction of small amounts of perfluoroalkylvinylethers in plastomeric polymers implies a higher polymer processability and better hot mechanical properties. The introduction of high amounts of perfluorovinylethers in crosslinkable fluoropolymers implies elastomeric properties at low temperature of fluorinated rubbers.

The need was felt, in the field of fluorinated polymer materials, to produce elastoamers having improved properties at low temperatures. Such properties can generally be expressed by the glass transition temperature Tg.

A lower Tg allows to have polymers which can be used at lower temperatures and therefore to have available elastomers with a wider use range. To obtain the combination of the above mentioned properties, fluorovinylethers must have a high unitary capability to modify the backbone properties, as well as high reactivity to be used as comonomers in elastomeric fluoropolymers. It was desirable to have available vinylethers obtainable by simple processes having a limited number of steps. Preferably it would be desirable to have available a continuous process for preparing said vinylethers.

To solve the above technical problem, fluorovinylethers having different structural properties, have been proposed in the prior art. However from the prior art, hereinafter described, various unsolved problems exist in the perfluorovinylether synthesis and in the preparation of the correspondig polymers having the combination of the above mentioned properties.

USP 3,132,123 describes the preparation of perfluoroalkylvinylethers, of the corresponding homopolymers and copolymers with TFE. Homopolymers are obtained under extreme experimental conditions, by using polymerization pressures from 4,000 to 18,000 atm. The perfluoromethylvinylether (PMVE) homopolymer is an elastomer: the Tg is not reported. The general formula of the described vinylethers is the following:

CF₂=CFOR⁰_{F}

wherein R⁰_{F} is a perfluoroalkyl radical preferably from 1 to 5 carbon atoms. A process for preparing these vinylethers is described in USP 3,291,843 wherein the starting acylfluoride is salified and pyrolized with carbonates also in the presence of solvents. By this process undesired hydrogenated byproducts are obtained.

USP 3,450,684 relates to vinylethers having the formula:

CF₂=CFO (CF₂CFX⁰O)ₙ,CF₂CF₂X⁰

wherein X^{o} = F, Cl, CF₃, H and n' can range from 1 to 20. Also homopolymers obtained by UV polymerization are reported. The exemplified copolymers are not characterized by their mechanical and elastomeric properties at low temperatures.

USP 3,635,926 relates to the emulsion copolymerization of perfluorovinylethers with TFE, showing that the presence of -COF acylfluoride end groups makes the polymers unstable. The same phenomenon was already reported in USP 3,085,083 in the perfluorovinylether polymerization systems in solvent.

USP 3,817,960 relates to the preparation and polymerization of perfluorovinylethers having the formula

CF₃O(CF₂O)_{n"}CF₂CF₂OCF=CF₂

wherein n" can range from 1 to 5. The compound synthesis is complex, it requires three steps. The preparation of the starting compound CF₃O(CF₂O)_{n"}CF₂C(O)F is carried out by oxidation at low temperature in the presence of U.V. radiations; besides the condensation with HFPO (hexafluoropropenoxide) and the subsequent alkaline pyrolisis is necessary. No characterization data on the above indicated properties are reported. With regard to this see patent application DE 19,713,806.

USP 3,896,179 relates to the separation of "primary" isomers of perfluorovinylether, for example of CF₃CF₂CF₂OCF=CF₂ from the corresponding less stable "secondary" isomers CF₃(CF₃)CFOCF=CF₂. The latter are undesired products as regards both the polymer preparation and the poor properties of the obtained polymers.

USP 4,340,750 relates to the preparation of perfluorovinylethers having the formula

CF₂=CFOCF₂R⁰_{f}X¹

wherein R⁰_{f} is a C₁-C₂₀ perfluoroalkyl optionally containing oxygen, X¹=H, Cl, Br, F, COOR⁰, CONR⁰R' wherein R⁰ is a C₁-C₁₀ alkyl group and R' represents H or a C₁-C₁₀ alkyl group. In the preparation of these compounds an acylfluoride together with iodine and tetrafluoroethylene is used, avoiding the final step of the acylfluoride pyrolisis which comes from the perfluoro-propene epoxide, by a deiodofluorination reaction, which takes place with low yields.

USP 4,487,903 relates to the preparation of fluoroelastomeric copolymers using perfluorovinylethers having the formula:

CF₂=CF (OCF₂CFY⁰)ₙ⁰OX²

wherein n⁰ ranges from 1 to 4 ; Y⁰=F, Cl, CF₃, H; X² can be C₁-C₃ perfluoroalkyl group, C₁-C₃ ω-hydroperfluoroalkyl group, C₁-C₃ ω-chloroperfluoroalkyl group. The polymer has a content of fluorovinylether units content ranging from 15 to 50% by moles. These vinylethers give copolymers which at low temperatures have better properties than those of the above mentioned perfluorovinylethers PVE (perfluoropropylvinylether) and MVE type. In the patent it is disclosed that in order to have good properties at low temperature, the presence of at least two ether bonds in the side chain adjacent to the double bond is required. Furthermore from the patent it results that for n° values higher than 4 it is difficult to purify the monomers and the effect on the decrease of the polymer T_{g} is lower. Besides the reactivity of the described vinylethers is very low and it is difficult to obtain polymers having a high molecular weight able to give good elastomeric properties for the indicated applications.
A TFE/perfluorovinylether copolymer (n^{o}=2) 31/69 % by weight with Tg of -32°C is exemplified. However the polymer is obtained with very long reaction times (96 hours of polymerization). Also in this case no characterization data of the cured elastomer are given.

EP 130,052 describes the perfluorovinylpolyether (PVPE) polymerization which leads to amorphous perfluoropolymers with a T_{g} ranging from -15 to -100°C. The described polymers have T_{g} values reaching up to -76°C; the further T_{g} decrease is obtained by using perfluoropolyethers as plasticizers. In the patent copolymers and terpolymers of TFE and MVE with vinylethers (PVPE) having the formula

CF₂=CFO(CF₂CF(CF₃)O)ₙ'''R⁰_{f},

are described, wherein n''' ranges from 3 to 30 and R⁰_{f}, is a perfluoroalkyl group. Due to purification difficulties, the used vinylethers are vinylether mixtures with different n''' values. According to said patent the most evident effect on the T_{g} decrease is shown when n''' is equal to or higher than 3, preferably higher than 4. According to the polymerization examples described in said patent the final mass of the polymer, besides the hot and under vacuum treatment, must then be washed with freon^{®} TF in order to remove all the unreacted monomer (PVPE). From the Examples it results that the reactivity of all the described monomers (PVPE) is poor.

USP 4,515,989 relates to the preparation of new intermediates for the fluorovinylether synthesis. According to the patent the vinylether synthesis is improved by using an intermediate able to more easily decarboxylate. For its preparation fluoroepoxides of formula: 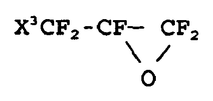 wherein X³ = Cl, Br are used.

USP 4,766,190 relates to the polymerization of perfluorovinylpolyethers (PVPE) similar to those of USP 4,487,903 with TFE and low perfluoropropene percentages, in order to increase the mechanical properties of the obtained polymers.

EP 338,755 relates to the preparation of perfluorinated copolymers by using direct fluorination of partially fluorinated copolymers. More reactive partially fluorinated monomers are used, the obtained polymers are fluorinated with elemental fluorine. The fluorination step requires a supplementary process unit, besides in this step elemental fluorine is used, which is a highly oxidizing gas, with the consequent precautions connected to its use. Besides in the patent it is stated that in order not to compromise the fluorination reaction and the properties of the obtained polymer, using the invention process the percentage of the comonomer in the polymer cannot exceed 50% by moles.

USP 5,268,405 reports the preparation of perfluorinated rubbers having a low Tg, by using high viscosity perfluoropolyethers as plasticizers of perfluorinated rubbers (TFE/MVE copolymers). However during the use perfluoropolyether bleeds take place. This is true especially for the the PFPE having a low molecular weight (low viscosity): in said patent, therefore, the high viscosity PFPE use is suggested, and therefore the low viscosity PFPEs must previously be removed.

USP 5,350,497 relates to the preparation of perfluoroalkylvinylethers by fluorination with elemental fluorine of hydrofluorochloroethers and subsequent dechlorination.

USP 5,401,818 relates to the prepartion of perfluorovinylethers of formula:

R¹_{f}(OCF₂CF₂CF₂)_{m'}-OCF=CF₂

(wherein R¹_{f} is a C₁-C₃ perfluoroalkyl radical and m' is an integer ranging from 1 to 4) and of the corresponding copolymers having improved properties at low temperature. The preparation of said perfluorovinylethers is carried out by 7 steps, some of them have very low yields, and comprise also a fluorination with elemental F₂. The reactivity of said perfluorovinylethers is anyhow low.

As it is shown from the above reported prior art, the perfluorovinylether synthesis generally involves a multistep process with low yields (USP 3,132,123, USP 3,450,684), with additional purifications to remove undesired isomers (USP 3,896,179) and the need to control the undesired hydrogenated by-products (USP 3,291,843). Alternatively, in the synthesis substances acting as intermediates, which are suitably prepared, and which allow to eliminate said drawbacks (USP 4,340, 750, USP 4,515,989), are used.

Furthermore in some cases the vinylether preparation requires the fluorination with elemental fluorine of partially fluorinated intermediates (USP 5,350,497); or, to avoid synthesis and low reactivity problems of the perfluorovinylethers, fluorination of partially fluorinated polymers (EP 338,755) is suggested.

Other problems shown in the prior art relate to the low reactivity of the perfluorovinylethers, which makes it necessary the recovery of the unreacted monomers from the reaction products (UK 1,514,700), and the stability problems for the polymers having -C(O)F end groups (USP 3,635,926). These last can be furtherly transformed by suitable reactants in order to increase the stability of the fluorinated polymer (EP 178,935).

Perfluorooxyalkylvinylethers are furthermore used to confer to the fluorinated rubbers good properties at low temperatures, and specifically to lower the glass transition temperature.

By increasing the perfluorooxyalkyl units forming the side perfluorooxyalkyl substituent, the T_{g} of the respective obtainable amorphous copolymers decreases, but at the same time the vinylether reactivity drastically decreases, making it difficult or impossible to obtain polymers having a sufficiently high molecular weight for giving to the polymers the desired elastomeric properties, and besides making more evident the problems previously shown for the recovery of the unreacted monomer from the polymerization products or from the polymer itself (USP 4,487,903 - EP 130,052). In some cases, where the monomer cannot be completely removed by simple stripping under vacuum, more washings must then be carried out with fluorinated solvents for completely eliminating the unreacted vinylether from the polymer mass.

The amorphous copolymers of TFE with perfluoromethylvinylether have a T_{g} around 0°C or slightly lower (Maskornik, M. et al. "ECD-006 Fluoroelastomer - A high performance engineering material". Soc. Plast Eng. Tech. Pao. (1974), 20, 675-7).

The T_{g} extrapolated value of the MVE homopolymer is of about -5°C (J. Macromol. Sci.-Phys., B1(4), 815-830, Dec. 1967).

In USP 5,296,617 and 5,235,074 there is described the hypofluorite CF₂(OF)₂ reactivity towards unsaturated products, which contemporaneously leads to the formation of the dioxolane derivative and to the fluorination compound of the olefin itself. In EP 683,181 there is described the CF₂(OF)₂ reactivity towards olefins which leads to the formation of linear reaction compound between one hypofluorite molecule and two molecules of the same olefin, for the preparation of symmetric dienes.

More specifically fluoroelastomers, suitable to the preparation of O-rings, based on monomeric units deriving from vinylidenfluoride (VDF), hexafluoropropene (HFP), perfluoroalkylvinylethers (PAVE) such as for example methylvinylether, and optionally tetrafluoroethylene (TFE), which are curable by ionic route, have high elastomeric properties at low and high temperatures and show good processability, e.g. increased mould release after curing (see USP 5,260,393). Said fluoroelastomers show improved properties with respect to the copolymers formed by VFD and HFP units, used in the O-ring preparation. In fact said last copolymers show good hot properties, but poor properties at low temperatures.

It is also known that fluoroelastomers having better cold properties are those based on VDF, PAVE and optionally TFE units, curable by radical route with peroxides and crosslinking agents.

By this kind of crosslinking, however, the process for producing manufactured articles is more complex with respect to the crosslinking of ionic type.

Fluoroelastomers based on monomeric units deriving from vinylidenfluoride (VDF), which are curable by ionic route and suitable for the production of shaft seals and fuel hoses (see USP 5,260,392), are also known.

As it is known, the preparation of such manufactured articles requires elastomers having an optimal combination of the following properties: good resistance properties to motor oils and/or petrols, good resistance properties at high temperatures as well as good cold behaviour and in particular, for the manufactured articles as shaft seals, good processability in both compression and injection moulding and also good curing rate.

It is known to use for such manufactured articles fluoroelastomers formed by monomeric units of VDF, perfluoroalkylvinylethers (PAVE) and tetrafluoroethylene (TFE).

Said copolymers have good properties at low temperatures, however they show the drawback to be curable only by peroxidic route, with all the drawbacks due to said curing method, such as for example the need to carefully control the temperatures in the compounding operations, the short scorch and thermal activation times.

Fluoroelastomes having an improved processability and very good mechanical and elastic properties curable both by ionic and peroxidic route, are also known.

It is also known that an improvement in the fluoroelasomer processability is obtainable by suitably mixing polymers having a different molecular weight distribution. This inevitably implies, besides swelling phenomena after extrusion, a worsening in the mechanical properties and in the final product mouldability.

Said fluoroelastomers show an improved processability, especially during the blend calendering, combined with very good mechanical and workability properties during the extrusion and the injection moulding, together with a very good mould release. These fluoroelastomers are obtained by introducing in the polymer chain small amounts of a bis-olefin (see USP 5,585,449).

The above described fluoroelastomers have however the drawback to show at low temperatures properties not yet able to satisfy the most urgent requirements of resistance at low temperatures, such as for exmaple in car industry, wherein materials are required having the combination of the following properties:
- chemical resistance to petrols additived with alcohols or MBTE or other polar compounds,
- high resistance at low temperatures such as for example shown by TR 10 (ASTM D 1329 method),
- very low Tg,
- maintenance of good elastomeric properties, such as for example mechanical and sealing properties, in particular at high temperatures.

The Applicant has surprisingly and unexpectedly found that it is possible to solve the above technical problem as described hereinafter, by using special fluorovinylethers, which are furthermore easily synthetizable and obtainable by a continuous process.

An object of the present invention are fluoroelastomers comprising in the polymer chain units deriving from fluorovinylethers of general formula:

CFX=CXOCF₂OR (I)

wherein R is a C₂-C₆ linear, branched or C₅-C₆ cyclic (per) fluoroalkyl group, or a C₂-C₆ linear, branched (per)fluoro oxyalkyl group containing from one to three oxygen atoms; when R is a fluoroalkyl or fluorooxyalkyl group as above defined it can contain from 1 to 2 atoms, equal to or different from each other, selected from the following: H, Cl, Br, I;
X = F, H, wherein the amount of fluorovinylethers is higher than 10% by moles, preferably in the range 15-20% by moles or higher.

The fluorovinylethers of general formula:

CFX=CXOCF₂OCF₂CF₂Y (II)

wherein Y = F, OCF₃; X as above defined, are preferred among the compounds of formula (I).

The perfluorovinylethers of formula:

CF₂=CFOCF₂OCF₂CF₂Y (III)

wherein Y is as above defined, are furtherly preferred.

The perfluorovinylether having the formula:

CF₂=CFOCF₂OCF₂CF₃ (IV)

is still furtherly preferred.

Surprisingly, the vinylethers according to the invention show the advantages reported hereinafter with respect to the known vinylethers.

The obtainable advantages can be attributed to the -OCF₂O- unit directly bound to the ethylene unsaturation.

The Tg lowering obtained with the vinylethers of the invention is connected to the presence of the (-OCF₂O-) unit directly bound to the unsaturation. The Tg lowering is surprisingly so evident to be defined a primary effect.

In fact if the vinylether of the invention with two oxygen atoms is used:

CF₂=CF-O-CF₂-O-CF₂CF₃ (MOVE 1)

the Tg lowering, in copolymers with TFE having vinylether percentages of about 46% by weight is of 35°C with respect to PVE

CF₂=CF-O-CF₂CF₂CF₃ (PVE)

and of 15°C with respect to the vinylether having the same formula, but with the second oxygen atom in a different position and without showing the characteristic unit (-OCF₂O-)

CF₂=CF-O-CF₂CF₂-O-CF₃ (β-PDE)

It is still more surprising to notice that with respect to MVE

CF₂=CF-O-CF₃

the β-PDE vinylether does not give any advantage as regards Tg.

On the contrary the primary effect of the (-OCF₂O-) unit results very clear with the vinylethers of the invention (MOVE).

It has been found that the (-OCF₂O-) unit bound to the ethylene unsaturation of the vinylethers of the invention increases the vinylether reactivity, reducing the rearrangements to COF which cause instability.

The advantages of the polymers of the invention can be summarized as follows:
- The reactivity of the new monomers allows to prepare copolymers having a very low content of carboxylic groups or derivatives thereof such -C(O)F, -COO-. The carboxylic group content in the copolymer with TFE has resulted of about 10 times lower than that of a copolymer prepared under the same conditions but using PVE instead of fluorovinylethers (see the Examples). As said, the presence of a lower content of carboxylic groups, or of the corresponding derivatives (amides, esters, etc.) allows to obtain more stable polymers.
- The reactivity of the monomers of formula (I) is surprisingly high (see the Examples).
- To obtain amorphous polymers the amount of the vinylether of the invention is higher than 10% by moles, preferably in the range from about 15 to 20% by moles, or higher.
- The properties at low temperature (T_{g}) of the polymers of the invention result clearly better with respect both to copolymers having the same MVE content (see the Examples) and also, surprisingly, with respect to copolymers where the perfluorovinylether, the oxygen atoms being equal, does not show the -OCF₂O- group directly bound to the unsaturation, as in the case of the CF₂=CFOCF₂CF₂OCF₃ (β-PDE) (see the Examples).
- A further advantage of the fluorovinylethers (I) of the invention, as hereinafter illustrated, consists in that their preparation is carried out in a continuous plant by a limited number of steps. Furthermore the used raw materials are cheap. The following ones can for example be mentioned:
   CF₂(OF)₂, CF₂=CF₂, CF₂=CFOCF₃, CHCl=CFCl, CFCl=CFCl, CF₂=CFCl, CF₂=CFH, CF₂=CH₂, CHCl=CHCl and other olefins.

The use of these reactants is specified in the synthesis process of the vinylethers of the invention.

The copolymers of the invention are obtainable by polymerizing with the suitable comonomers the fluorovinylethers of general formula (I)- (IV). To obtain the fluoroelastomers of the invention the amount of the comonomers of formula (I)-(IV) used in the comonomer mixture is higher than 10% by moles.

With copolymer, a polymer containing the vinylether of the invention and one or more comonomers, is meant.

With comonomers, fluorinated compounds having at least one polymerizable double bond C=C, optionally containing in the molecule hydrogen and/or chlorine and/or bromine and/or iodine and/or oxygen, are meant, said comonomers being able to produce (co)polymers in the presence of radical initiators.

Optional comonomers which can be copolymerized are non fluorinated C₂-C₈ olefins, such as ethylene, propylene, isobutylene.

Among the usable comonomers the following can be mentioned:
- C₂-C₈ perfluoroolefins, such as tetrafluoroethylene (TFE), hexafluoropropene (HFP), hexafluoroisobutene;
- C₂-C₈ hydrogenated fluoroolefins, such as vinyl fluoride (VF), vinylidene fluoride (VDF), trifluoroethylene, CH₂=CH-R²_{f} perfluoroalkylethylenes wherein R²_{f} is a C₁-C₆ perfluoroalkyl;
- C₂-C₈ chloro- and/or bromo- and/or iodo-fluoroolefins, such as chlorotrifluoroethylene (CTFE) and bromotrifluoroethylene;
- CF₂=CFOR²_{f} (per)fluoroalkylvinylethers (PAVE), wherin R²_{f} is a C₁-C₆ (per)fluoroalkyl, for example trifluoromethyl, bromodifluoromethyl or heptafluoropropyl;
- CF₂=CFOX^{a} (per)fluoro-oxyalkylvinylethers, wherein X^{a} is a C₁-C₁₂ alkyl, or a C₁-C₁₂ oxyalkyl, or a C₁-C₁₂ (per)fluorooxyalkyl having one or more ether groups, for example perfluoro-2-propoxy-propyl.
- sulphonic monomers having the structure CF₂=CFOX^{b}SO₂F, wherein X^{b} = CF₂CF₂, CF₂CF₂CF₂, CF₂CF(CF₂X^{c}) wherein X^{c} = F, Cl, Br.
- a bis-olefin having the general formula

   R^{I}₁R^{I}₂ C=CR^{I}₃-Z-CR^{I}₄=CR^{I}₅R^{I}₆ (IA)

   wherein
   R^{I}₁, R^{I}₂, R^{I}₃, R^{I}₄, R^{I}₅, R^{I}₆ equal to or different from each other, are H or C₁-C₅ alkyls;
   Z is a C₁-C₁₆ linear or branched alkylene or cycloalkylene radical, optionally containing oxygen atoms, preferably at least partially fluorinated, or a (per)fluoropolyoxy-alkylene radical.

In the formula (IA), Z is preferably a C₄-C₁₂ perfluoroalkylene radical, while R^{I}₁, R^{I}₂, R^{I}₃, R^{I}₄, R^{I}₅, R^{I}₆ are preferably hydrogen.

When Z is a (per)fluoropolyoxyalkylene radical, it preferably has the formula:

-(Q)ₚ-CF₂O-(CF₂CF₂O)ₘₐ(CF₂O)ₙₐ-CF₂-(Q)ₚ- (IIA)

wherein:
Q is a C₁-C₁₀ alkylene or oxyalkylene radical;
p is 0 or 1;
ma ed na are integers such that the ma/na ratio is comprised between 0.2 and 5 and the molecular weight of said (per)fluoropolyoxyalkylene radical is in the range from 500 to 10,000, preferably from 1,000 to 4,000. Preferably, Q is selected from the following groups:

   -CH₂OCH₂-; -CH₂O(CH₂CH₂O)ₛCH₂-, with s = 1-3.

The bis-olefins of formula (IA) wherein Z is an alkylene or cycloalkylene radical can be prepared according to what described, for example, by I.L. Knunyants et al. in Izv. Akad. Nauk. SSR, Ser. Khim. 1964(2), 384-6, while the bis-olefins containing (per)fluoropolyoxyalkylene sequences are described in USP 3,810,874.

The amount of units in the chain deriving from said bis-olefins is generally in the range 0.01-1.0 by moles.

The above indicated comonomers, polymerizable with perfluorovinylethers, can be used separately or in admixture with other comonomers.

The base structure of the fluoroelastomer can in particular be selected from:
(1) copolymers based on VDF, wherein the latter is copolymerized with at least one comonomer selected from: C₂-C₈ perfluoroolefins such as tetrafluoroethylene (TFE), hexafluoropropene (HFP); C₂-C₈ chloro- and/or bromo- and/or iodo-fluoroolefins, such as chlorotrifluoroethy-ethylene (CTFE) and bromotrifluoroethylene; CF₂=CFOR^{t}_{f} (per)fluoroalkylvinylethers (PAVE), wherein R^{t}_{f} is a C₁-C₆ (per)fluoroalkyl, for example trifluoromethyl, bromodifluoromethyl, pentafluoropropyl; CF₂=CFOX^{t} perfluorooxyalkylvinylethers, wherein X^{t} is a C₁-C₁₂ perfluorooxyalkyl having one or more ether groups, for example perfluoro-2-propoxy-propyl; C₂-C₈ non fluorinated olefins (Ol), for example ethylene and propylene;
(2) copolymers based on TFE, where the latter is copolymerized with at least one comonomer selected from: is as above defined; CF₂=CFOX^{t} perfluorooxyalkylvinylethers, wherein X^{t} is as above defined; C₂-C₈ fluoroolefins containing hydrogen and/or chlorine and/or bromine and/or iodine atoms; C₂-C₈ non fluorinated olefins (Ol).

Inside the above defined classes of fluoroelastomers, preferred base monomeric compositions (by moles) are the following:

| | | |
|---|---|---|
| - | VDF | 45-85 |
| | HFP and/or PAVE | 0-45 |
| | TFE | 0-30 |
| | MOVE | higher than 10 up to 45, preferably up to 40 |
| | Ol | 0-40 |
| | the sum of HFP+PAVE+MOVE being at most 45%; | |
| - | TFE | 50-85 |
| | PAVE | 0-50 |
| | MOVE | higher than 10 up to 50, preferably up to 40 |
| | Ol | 0-40 |

the sum of PAVE+MOVE being at most 50.

The fluoroelastomers of the invention are preferably cured by peroxidic route.

When they are cured by ionic route, the preferred compositions (expressed by moles) are the following when the fluoroelastomer is used for obtaining shaft seals or fuel hoses the following compositions (by moles) are preferred:

| | | |
|---|---|---|
| - | VDF | 30-47 |
| | HFP | 20-40 |
| | PAVE | 0-17 |
| | TFE | 10-30 |
| | MOVE | higher than 10 up to 20 |

the sum PAVE+MOVE lower than or equal to 20% by moles.

In the case of fluoroelastomers curable by peroxidic route, it is preferable to add small amounts of a bis-olefin as above mentioned.

In order to reach a good curing degree it is suitable to use fluoroelastomers containing reactive sites, i.e. iodine and/or bromine in chain, preferably iodine (cure site monomer).

Also an iodinated and/or brominated transfer agent can be used.

The process for the preparation of fluorinated polymers according to the present invention can be carried out by polymerization in organic solvent as described in USP 4,864,006 and 5,182,342, herein incorporated by reference. The organic solvent is selected from the group comprising chlorofluorocarbons, perfluoropolyethers, hydrofluorocarbons and hydrofluoroethers.

Alternatively the preparation of fluoroelastomers of the present invention can be carried out by copolymerization of the monomers in aqueous emulsion according to well known methods in the prior art, in the presence of radical initiators (for example alkaline or ammonium persulphates, perphosphates, perborates or percarbonates), optionally in combination with ferrous, cuprous or silver salts, or of other easily oxidizable metals. In the reaction medium also surfactants of various type are usually present, among which the fluorinated surfactants of formula:

R³_{f}-X⁻ M⁺

are particularly preferred, wherein k³_{f} is a C₅-C₁₆ (per) fluoroalkyl chain or a (per)fluoropolyoxyalkyl chain, X⁻ is -COO- or -SO₃⁻, M⁺ is selected from: H⁺, NH₄⁺, an alkaline metal ion. Among the most commonly used, ammonium perfluorooctanoate, (per)fluoropolyoxyalkylenes ended with one or more carboxylic groups, etc. can be mentioned.
See USP 4,990,283 and USP 4,864,006.

At the end of the polymerization, the fluoroelastomer is separated from the emulsion by conventional methods, such as coagulation by addition of electrolytes or by cooling.

Alternatively, the polymerization can be carried out in bulk or in suspension, in an organic liquid where a radical initiator is present, according to well known techniques.

The polymerization reaction is generally carried out at temperatures comprised between 25°C and 150°C, under pressure up to 10 MPa.

The preparation of the fluoroelastomers of the present invention is preferably carried out in aqueous emulsion in the presence of an emulsion, dispersion or microemulsion of perfluoropolyoxyalkylenes, according to USP 4,789,717 and USP 4,864,006.

The fluoroelastomers of the present invention are preferably cured by peroxidic route, wherefore they preferably contain in the chain and/or in terminal position of the macromolecules iodine and/or bromine atoms, preferably iodine. The introduction of such iodine and/or bromine atoms can be carried out by addition, in the reaction mixture, of brominated and/or iodinated cure-site comonomers, such as bromo and/or iodo olefins having from 2 to 10 carbon atoms (as described for example in USP 4,035,565 and USP 4,694,045), or iodo and/or bromo fluoroalkylvinylethers (as described in patents US 4,745,165, US 4,564,662 and EP 199,138), in amounts such that the content of cure-site comonomers in the final product is generally in the range 0.05-2 moles for 100 moles of the other base monomeric units.

Alternatively or also in combination with cure-site comonomers, it is possible to introduce iodine and/or bromine end atoms by addition to the reaction mixture of iodinated and/or brominated chain transfer agents, such as for example compounds of formula R^{b}_{f}(I)ₓ(Br)_{y}, wherein R^{b}_{f} is a (per)fluoroalkyl or a (per)fluorochloroalkyl having from 1 to 8 carbon atoms, while x and y are integers comprised between 0 and 2, with 1≤ x+y ≤ 2 (see for example patents US 4,243,770 and US 4,943,622).

It is also possible to use as chain transfer agents iodides and/or bromides of alkaline or alkaline-earth metals, according to USP 5,173,553.

Alternatively or in combination with the chain transfer agents containing iodine and/or bromine, other chain transfer agents known in the prior art, such as ethyl acetate, diethyl-malonate, etc., can be used.

Curing by peroxidic route is carried out, according to known techniques, by addition of a suitable peroxide able to generate radicals by heating.

Among the most commonly used we remind: dialkylperoxides, such as for example di-terbutyl-peroxide and 2,5-dimethyl-2,5-di(terbutylperoxy)hexane; dicumyl peroxide, dibenzoyl peroxide; diterbutyl perbenzoate; di-[1,3-dimethyl-3-(terbutylperoxy)butyl]carbonate. Other peroxidic systems are described, for example, in European patent applications EP 136,596 and EP 410,351.

To the curing blend other compounds are then added, such as:
(a) curing coagents, in amounts generally in the range 0.5-10%, preferably 1-7%, by weight with respect to the polymer; among them: triallyl-cyanurate, triallylisocyanurate (TAIC), tris(diallylamine)-s-triazine; triallylphosphite; N,N-diallyl-acrylamide; N,N,N',N'-tetraallyl-malonamide; tri-vinyl-isocyanurate; and 4,6-tri-vinyl-methyltrisiloxane, etc. are commonly used: TAIC is particularly preferred;
(b) a metal compound, in amounts in the range 1-15%, preferably 2-10%, by weight with respect to the polymer, selected from oxides and hydroxides of divalent metals, such as for example Mg, Zn, Ca or Pb, optionally combined with a weak acid salt, such as for example stearates, benzoates, carbonates, oxalates or phosphites of Ba, Na, K, Pb, Ca;
(c) other conventional additives, such as thickeners, pigments, antioxidants, stabilizers and the like.

The fluoroelastomers of the present invention can be cured by ionic route. Suitable well known in the art curing and accelerating agents are added to the curing blend, besides the above mentioned products at points (b) and (c). For example, as curing agents aromatic or aliphatic polyhydroxylated compounds, or derivatives thereof can be used, as described for example in EP 335,705 and USP 4,233,427. Among them it can in particular be mentioned: di-, tri- and tetra-hydroxybenzenes, naphthalenes or anthracenes; bisphenols wherein the two aromatic rings are linked each other by an aliphatic, cycloaliphatic or aromatic bivalent radical, or by one oxygen or sulphur atom, or also one carbonyl group. The aromatic rings can be replaced with one or more chlorine, fluorine, bromine atoms, or with carbonyl, alkyl, acyl.

As accelerants it can for example be used: ammonium, phosphonium, arsonium or antimony quaternary salts (see for example EP 335,705 and USP 3,876,654); amino-phosphonium salts (see for example USP 4,259,463); phosphoranes (see for example USP 3,752,787); the iminic compounds described in EP 182,299 and EP 120,462; etc. Also adducts between an accelerant and a curing agent can be used, see patents US 5,648,429, US 5,430,381, US 5,648,430 herein incorporated by reference.

It is also possible to use systems of mixed, both ionic and peroxidic, curing, as described in EP 136,596.

The synthesis process of the new (per)fluorovinylethers, which comprises the reaction of the hypofluorite with a fluorinated olefin of formula R₁R₂C=CR₃R₄ to give the intermediate hypofluorite F-CR₁R₂-CR₃R₄-OCF₂OF, the subsequent reaction of said compound with a second fluorinated olefin of formula R₅R₆C=CR₇R₈ to give the intermediate F-CR₁R₂-CR₃R₄-OCF₂O-CR₅R₆-CR₇R₈-F which by dehalogenation or dehydrohalogenation leads to the new perfluorovinylethers.
The general scheme of the synthesis is the following:
a)

   CF₂(OF)₂ + R₁R₂C=CR₃R₄ → F-CR₁R₂-CR₃R₄-OCF₂OF (VI)
b)

   F-CR₁R₂-CR₃R₄-OCF₂OF + R₅R₆C²=C¹R₇R₈ -----→ F-CR₁R₂-CR₃R₄-OCF₂O-C²R₅R₆-C¹R₇R₈-F (VII)
c) 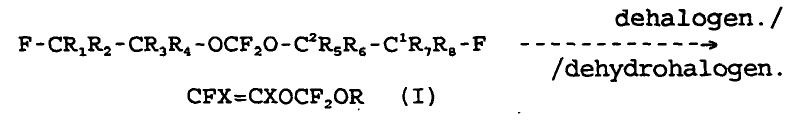
In this synthesis scheme:
- with reference to the formula of the compound (VII) :
   - R₁, R₄, equal or different, are H, F; R₂, R₃, equal or different are H, Cl under the following conditions: (1) when the final reaction is a dehalogenation R₂, R₃ = Cl, (2) when the final reaction is a dehydrohalogenation one of the two substituents R₂, R₃ is H and the other is Cl;
- R₅, R₆, R₇, R₉ are:
   - F, or one of them is a C₁-C₄ linear or branched perfluoroalkyl group, or a C₁-C₄ linear or branched perfluorooxyalkyl group containing from one to three oxygen atoms, or R₅ and R₇, or R₆ and R₈, are linked each other to form with C² and C¹ a C₅-C₆ cycle perfluoroalkyl group;
   - when one of the R₅ to R₈ radicals is a C₂-C₄ linear or branched fluoroalkyl, or a C₂-C₄ linear or branched fluorooxyalkyl containing from one to three oxygen atoms, one or two of the other R₅ to R₈ are F and one or two of the remainders, equal to or different from each other, are selected from H, Cl, Br, Iodine; when the substituents selected from H, Cl, Br, Iodine are two, they are both linked to the same carbon atom; when R₅ and R₇, or R₆ and R₈, are linked each other to form with C² and C¹ a C₅-C₆ cycle fluoroalkyl group, one of the two free substituents R₆, R₈ or R₅, R₇ is F and the other is selected from H, Cl, Br, Iodine.
- the fluoroalkene used in the reaction a) is replaceable with that of the subsequent reaction b); in this case the meanings defined for the substituents of the R₁-R₄ group, and respectively of the R₅-R₈ group, are interchangeable each other, with the proviso that the position of each radical of each of the two groups R₁-R₄ and R₅-R₈ with respect to -OCF₂O-on the chain of the intermediate compound (VII), is the same which is occupied if the synthesis takes place according to the above reported scheme and the two olefins each react in the considered steps.

In the first reaction a) of the above illustrated scheme a hypofluorite gas flow CF₂(OF)₂, suitably diluted with an inert fluid, comes into contact, in a suitable reactor with outlet, on the bottom of the same (first reactor), with a flow of the R₁R₂C=CR₃R₄ olefin, optionally diluted in an inert fluid, so as to allow the chemical reaction a) with formation of the intermediate hypofluorite (VI). To favour the reaction stoichiometry, the reactants must be introduced into the reactor in an approximately unitary molar ratio, or with an excess of CF₂(OF)₂. The residence time of the mixture in the reactor can range from few hundredths of second up to about 120 seconds depending on the olefin reactivity, the reaction temperature and the presence of optional reaction solvents.

The reaction temperature can range from -40° to -150°C, preferably from -80° to -130°C.

The compound (VI) usually is not separated from the reaction product and it is transferred in a continuous way to the subsequent reaction described in step b).

The mixture of the products coming out from the first reactor can be heated at room temperature before being fed into the second reactor.

In the second reaction b) the second olefin R₅R₆C=CR₇R₈ pure or in solution, reacts with the product obtained in the first reaction with formation of compound (VII).

The olefin can be fed in a continuous way, so as to maintain its concentration constant in the reactor. The temperature of the reaction b) can range from -20° to - 130°C, preferably from -50° to -100°C. The olefin concentration is higher than or equal to 0.01M, preferably the concentration is higher than 3M, more preferably also the pure compound can be used.

The solvents used in steps a) and b) are perfluorinated or chlorohydrofluorinated solvents or hydrofluorocarbons. Examples of said solvents are: CF₂Cl₂, CFCl₃, CF₃CF₂H, CF₃CFH₂, CF₃CF₂CF₃, CF₃CCl₂H, CF₃CF₂Cl.
In the reaction c) the compound (VII), dependently on the olefins used in steps a) and b), after distillation from the reaction product, is subjected to dechlorination or to dehydrochlorination to obtain the vinylethers of formula (I). This last step can be carried out by using reactions widely described in the prior art. The suitable selection of the substituents R₁ to R₈ in the two olefins used in the synthesis allows to obtain the vinylethers of the present invention.

Another object of the invention is a process wherein a hypofluorite of formula X₁X₂C(OF)₂ wherein X₁ and X₂ equal or different are F, CF₃, and two fluoroalkenes of formula respectively R^{A}₁R^{A}₂C=CR^{A}₃R^{A}₄ and R^{A}₅R^{A}₆C=CR^{A}₇R^{A}₈, wherein R^{A}₁-R^{A}₈ equal or different, are F, H, Cl, Br, I, -CF₂OSO₂F, -SO₂F, -COF, C₁-C₅ linear or branched perfluoroalkyl or oxyperfluoroalkyl group, are reacted according to steps a) and b), excluding the dehalogenation or dehydrohalogenation step, to obtain compounds of general formula (VIII)

F-CR^{A}₁R^{A}₂-CR^{A}₃R^{A}₄-OCF₂O-CR^{A}₅R^{A}₆-CR^{A}₇R^{A}₈-F.

The following Examples are reported with the purpose to illustrate the invention and they do not limit the scope of the same.

In the Examples the thermogravimetric analysis TGA is carried out by using a 10°C/min rate.

### EXAMPLE 1

### Synthesis of CF₃CF₂OCF₂OCFClCF₂Cl perfluoro-1-2,dichloro-3,5-dioxaheptane.

The used reactor is of cylindrical type, with a total volume of 300 ml and is equipped with magnetic dragging mechanical stirrer, turbine with recycle of the reacting gas placed at 20 cm from the reactor top, internal thermocouple, two internal copper pipes for the reactant feeding which end at about 1 mm from the turbine, and product outlet from the bottom. In the reactor, inside which the temperature is maintained at -114°C, 1.1 l/h (litres/hour) of CF₂(OF)₂ and 3.3 l/h of He are introduced through one of the two inlet pipes; A flow of 1.1 l/h of CF₂=CF₂ and 0.7 l/h of He is maintained through the second inlet pipe. Feeding is continued for 6.6 hours.

The residence time of the transport gas in the reaction zone comprised between the outlet of the two feeding pipes in the reactor and the inlet of the discharge pipe is of about 4 sec.

On the reactor bottom the reaction products are brought to room temperature and the gaseous mixture flow, monitored by gaschromatography, is fed in a continuous way, under mechanical stirring, into a second reactor having a 250 ml volume maintained at the temperature of -70°C, equipped with mechanical stirrer, thermocouple, dipping inlet for the reacting mixture, outlet with head of inert gas. The reactor contains 72.6 g of dichlorodifluoroethylene CFCl=CFCl.

At the end of the addition of reacting gases into the second reactor, the reaction raw material is distilled by a plate column at atmospheric pressure, collecting 41.5 g of the desired product (boiling point 91°C).

The yield of perfluoro-1,2 dichloro-3,5-dioxaheptane, calculated with respect to CF₂(OF)₂, is of 36%.

### Characterization of perfluoro 1,2, dichloro-3,5-dioxaheptane.

Boiling point at atmospheric pressure: 91°C.
¹⁹F-NMR spectrum in p.p.m. (with respect to CFCl₃ = O): -51.3/-53.0 (2F, O-CF₂-O); -70.6/-72.6 (2F, C-CF₂Cl); -78.0/-78.4 (1F, O-CFCl-C); -87.8 (3F, CF₃-C); -90.2/-91.8 (2F, C-CF₂-O).
Mass spectrum (E.I. electronic impact), main peaks and respective intensities:
69 (48.6%) ; 119 (84.3%) ; 151 (76.8%); 153 (69.8%); 185 (100%).
IR spectrum (cm⁻¹) intensity : (w) =weak, (m) =medium, (s)=strong, (vs)=very strong:
1407.3 (w); 1235.8 (vs); 1177.7 (vs); 1097.5 (vs);
1032.2 (s); 929.3 (w); 847.9 (m).

### EXAMPLE 2

### Synthesis of CF₃OCF₂CF₂OCF₂OCFClCF₂Cl perfluoro-1,2-dichloro-3,5,8-trioxanonane (isomer A) and of CF₃OCF(CF₃)OCF₂OCFClCF₂Cl perfluoro-1,2-dichloro-3,5,7-trioxa-6-methyloctane (isomer B)

In a reactor identical to that used in Example 1, maintained at the same temperature of -114°C, 1.55 l/h of CF₂(OF)₂ and 4.5 l/h of He are introduced through one of the two inlet pipes; through the second inlet pipe 1.4 l/h of CF₂=CF-OCF₃ and 0.7 l/h of He for 4.5 hours.

The residence time of the transport gas in the reaction zone comprised between the reactor outlet and the end of the two feeding pipes is of about 3 sec.

On the reactor bottom the reaction products are brought to room temperature and the gaseous mixture flow, monitored by gaschromatography, is fed in a continuous way, under mechanical stirring, into a second reactor identical to the one used for the same step in Example 1. Inside, where a temperature of -70°C is maintained, there are 51 g of dichlorofluoroethylene CFCl=CFCl.

At the end of the addition of the reacting gases into the second reactor, the reaction raw material is distilled by a plate column at the reduced pressure of 250 mmHg. 50 g of a mixture formed by two isomers, respectively, isomer A) perfluoro-1,2-dichloro-3,5,8-trioxanonane and isomer B) perfluoro-1,2-dichloro-3,5,7-trioxa-6-methyloctane are collected. The mixture composition is determined by gaschromatography and is the following: isomer A 79%, isomer B 21%. The molar yield of A+B with respect to the used CF₂(OF)₂ is 38%. The molar yield of A+B with respect to the used perfluoromethylvinylether is 42%. The isomers have been separated by preparative gaschromatography.

### Characterization of products A and B

Mixture boiling point (A 79%, B 21%) at the reduced pressure of 250 mmHg: 82°C.

¹⁹F-NMR spectrum in p.p.m. (with respect to CFCl₃=0) of the isomer A:

| | |
|---|---|
| -50.6/-52.4 (2F, O-CF₂-O); | -70.0/-71.8 (2F, C-CF₂Cl); |
| -77.7 (1F, O-CFCl-C); | -55.3/-55.6 (3F, CF₃-OC); |
| -90.7/-91.1 (2F, C-OCF₂-C) ; | -90.2/-90.6 (2F, C-OC-CF₂OCOC). |

¹⁹F-NMR spectrum in p.p.m. (with respect to CFCl₃=0) of isomer B:

| | |
|---|---|
| -50.0/-52.1 (2F, O-CF₂-O); | -70.0/-71.8 (2F, C-CF₂Cl); |
| -77.9 (1F, O-CFCl-C); | -54.6/-54.9 (3F, CF₃OC): |
| -85.7/-86.1 (3F, OC(CF₃)O); | -100.3/-101.0 (1F, OCF(C)O). |

Mass spectrum (electronic impact), main peaks and respective intensities:
Product A: 69 (50); 119 (100); 151 (50); 185 (42); 251 (38);
Product B: 69 (96); 97 (50); 135 (42); 151 (92); 185 (100).

IR spectrum (cm⁻¹), intensity of the mixture A 79%, B 21%: (w)=weak, (m)=medium, (s)=strong, (vs)=very strong:
1388 (w); 1288 (vs); 1233 (vs); 1151 (vs); 1104 (vs);
1032 (s); 846 (m); 685 (w).

### EXAMPLE 3

### Synthesis of CF₃OCF₂CF₂OCF₂OCHClCHFCl perfluoro-1.2-dichloro-1,2-dihydro-3,5,8-trioxanonane (isomer C) and of CF₃OCF(CF₃)OCF₂OCHClCHFCl perfluoro-1,2-dichloro-1,2-dihydro-3,5,7-trioxa-6-methyloctane (isomer D).

In a reactor identical to that used in Example 1, maintained at the temperature of -112°C, 1.55 l/h of CF₂(OF)₂ and 4.5 l/h of He are introduced through one of the two inlet pipes; through the second inlet pipe 1.4 l/h of CF₂=CF-OCF₃ and 0.7 l/h of He for 5 hours.

The residence time of the transport gas in the reaction zone comprised between the reactor outlet and the end of the two feeding pipes is of about 3 sec.

On the reactor bottom the reaction products are brought to room temperature and the gaseous mixture flow, monitored by gaschromatography, is fed in a continuous way, under mechanical stirring, into a second reactor identical to the one used for the same step in Example 1. Inside, the temperature is of -70°C and there are 50 g of 1,2-dichloroethylene CClH=CClH and 50 g of CFCl₃.

At the end of the addition of the reacting gases into the second reactor, after distillation of the solvent at room pressure, the reaction raw material is distilled by a plate column at the reduced pressure of 100 mmHg. 43.5 g of the mixture of the desired products (isomer C 78%, isomer D 22%, determined by gaschromaography) are collected. The molar yield of C+D with respect to the used CF₂(OF)₂ is 33%. The isomers have been separated by preparative gaschromatography.

### Characterization of products C and D

Mixture boiling point (C 78%, D 22%) at the reduced pressure of 100 mmHg: 71°C.

¹⁹F-NMR spectrum in p.p.m. (with respect to CFCl₃ = 0) of the isomer C perfluoro-1,2-dichloro-1,2-dihydro-3,5,8-trioxanonane:

| | |
|---|---|
| -56.0/-57.2 (2F, O-CF₂-O); | -143.2/-146.0 (1F, C-CHFCl); |
| -55.8 (3F, CF₃-OC); | -91.0/-91.4 (2F, C-OCF₂-C); |
| -90.3/-90.5 (2F, C-OC-CF₂OCOC). | |

¹⁹F-NMR spectrum in p.p.m. (with respect to CFCl₃=0) of the isomer D perfluoro-1,2-dichloro-1,2-dihydro-3,5,7-trioxa-6-methyloctane:

| | |
|---|---|
| -56.0/-57.2 (2F, O-CF₂-O); | -143.2/-146.0 (1F, C-CHFCl); |
| -54.9/-55.1 (3F, CF₃-OC); | -86.2/-86.3 (3F, OC(CF₃)O); |
| -100.5/-101.0 (1F, OCF(C)O). | |

¹H spectrum in p.p.m. (with respect to TMS) of the isomers C and D: 6.28/6.05 (1H -CHFCl) ; 6.02/5.95 (1H -CHCl-)

Mass spectrum (electronic impact), main peaks and respective intensities %:
69 (84) ; 119 (100) ; 185 (51.1) ; 251 (84) ; 281 (15.8) ; 283 (4.8); 347 (5.7); 349 (1.7).

IR spectrum (cm⁻¹) intensity : (w) =weak, (m) =medium, (s)=strong, (vs)=very strong:
3001.0 (w); 2920.9 (w); 2850.9 (w); 1286.3 (vs);
1233.7 (vs); 1125.5 (vs); 1081.8 (s); 1047.9 (s); 815.9 (m); 766.3 (m).

### EXAMPLE 4

### Dealogenation of perfluoro 1,2-dichloro-3,5-dioxaheptane

In a 25 ml three-necked flask, equipped with mechanical stirrer, thermometer, dropping funnel, distillation column equipped with water refrigerant and collecting trap maintained at -78°C and connected to a mechanical vacuum pump, 150 ml of DMF, 15 g of Zn in powder, 0.5 g of K₂CO₃ and 100 mg of I₂ are introduced. The internal temperature is brought to 80°C and 50 g of perfluoro -1,2-dichloro-3,5-dioxaheptane are added drop by drop.

When the addition is over the mixture is allowed to react for about 30 minutes. At the end the internal pressure is gradually brought from starting 760 mmHg to 300 mmHg. After about 20 minutes the collecting trap containing 34.2 g of perfluoro-3,5-dioxa-1-heptene (MOVE 1) is disconnected.

The dehalogenation yield is 85%.

### Characterization of perfluoro-3,5-dioxa-1-heptene (MOVE 1)

Boiling point at atmospheric pressure: 41.9°C.

¹⁹F-NMR spectrum in p.p.m. with respect to CFCl₃=0:

| | |
|---|---|
| -56.8 (2F, O-CF₂-O) ; | -87.2 (3F, CF₃-C); |
| -90.6 (2F, C-CF₂-O); | -114 (1F, O-C=C-F); |
| -121.8 (1F, O-C=CF); | -137 (1F, 0-C-F=C); |

Mass spectrum (electronic impact), main peaks and respective intensities:
69 (66.5%); 119 (100%); 147 (83.4%); 185 (89.4%); 216 (67.3%); 282 (8.2%).

IR spectrum (cm⁻¹) intensity: (w) =weak, (m) =medium, (s)=strong, (vs)=very strong:
1839.5 (m) ; 1407.6 (w) ; 1307.4 (vs) ; 1245.8 (vs) ; 1117.4 (vs) ; 907.2 (m); 846.0 (m).

### EXAMPLE 5

### Dehalogenation of the isomer mixture A+B obtained in Example 2 (perfluoro-1,2-dichloro-3,5,8-trioxanonane CF₃OCF₂CF₂CF₂OCFClCF₂Cl + perfluoro-1,2-dichloro-3,5,7-trioxa-6-methyloctane CF₃OCF (CF₃) OCF₂OCFClCF₂Cl).

In a 250 ml flask equipped as described in the previous Example 4, 110 ml of DMF, 10 g of Zn in powder and 0.3 ml of Br₂ are introduced. The internal temperature is brought to 75°C and 30.3 g of the binary mixture A+B separated in the previous Example 2 are added drop by drop. When the addition is over the mixture is allowed to ract for about 3 hours. At the end the internal pressure is gradually lowered from 760 mmHg to 200 mmHg at -79°C. After about 30 minutes the collecting trap is disconnected. The corresponding content, which is washed with water, is recovered. At the end 24.0 g of a mixture formed for 79% (gaschromatographic determination) by perfluoro-3,5,8-trioxa-1-nonene (MOVE 2) CF₃OCF₂CF₂OCF₂OCF=CF₂ (isomer A') and for 21% by perfluoro-3,5,7-trioxa-6,methyl-1 octene (MOVE 2a) CF₃OCF (CF₃)OCF₂O-CF=CF₂ (isomer B') are obtained, which are then separated by preparative gaschromatography.

### Characterization of products A' and B'

Boiling range of the isomer mixture at atmospheric pressure: 72.5°-74.5°C.

¹⁹F-NMR spectrum in p.p.m. (with respect to CFCl₃=0) of the isomer A' :
-55.9 (3F, CF₃-O); -56.9 (2F, O-CF₂-O); -90.8 (2F, C-CF₂-O); -91.2 (2F, O-CF₂-C); -114 (1F, O-C=C-F); -121.8 (1F, -O-C=CF); -137 (1F, O-CF=C)

¹⁹F-NMR spectrum in p.p.m. (with respect to CFCl₃=0) of the isomer B':
-55.9 (3F, CF₃-O); -56.2 (2F, O-CF₂-O); -86.4 (3F, CF₃-C); -100.9 (1F, CF; -114 (1F, O-C=C-F); -122 (1F, O-C=CF); -137 (1F, O-CF=C ).

Mass spectrum (electronic impact), main peaks and respective intensities of the isomer A':
69 (74); 81 (18); 119 (100); 147 (59); 185 (26); 251 (21);

Mass spectrum (electronic impact), main peaks and respective intensities of the isomer B':
69 (80) ; 81 (37) ; 97 (47); 119 (36); 147 (100); 185 (19).

IR spectrum (cm⁻¹), intensity: (w) =weak, (m) =medium, (s)=strong, (vs)=very strong, 1839 (m); 1343 (s); 1248 (vs); 1145 (vs); 918 (m); 889 (m).

### EXAMPLE 6

### Dehalogenation of the isomers C+D mixture obtained in Example 3 (CF₃OCF₂CF₂CF₂OCF₂OCHClCHFCl perfluoro-1,2-dichloro-1,2-dihydro-3,5,8-trioxanonane (isomer C)+ CF₃OCF(CF₃)OCF₂OCHClCHFCl perfluoro-1.2-dichloro-1.2-dihydro-3.5.7-trioxa-6-methyloctane (isomer D)).

In a 500 ml three-necked flask, equipped with mechanical stirrer, thermometer, dropping funnel, distillation column having a water refrigerant and a collecting trap maintained at the temperature of -78°C, 250 ml of DMF, 30 g of zinc in powder and 300 mg of I₂ are introduced.

The temperature is brought to 100°C and 56.9 g of the isomer mixture obtained in Example 3 are added drop by drop.

When the addition is over the reactor internal temperature is brought to 120°C and stirring is maintained for 24 hours. At the end the reaction product, which contains traces of solvent and which is collected in the trap maintained at -78°C, is distilled. After washing with water 35 g of a mixture of perfluoro-1,2-dihydro-3-5-8-trioxa-1-nonene (isomer C', 79% by moles) and of perfluoro-1,2-dihydro-3-5-7-trioxa-5-methyl-1-octene (isomer D', 21% by moles) are recovered. The isomers are separated by preparative gaschromatography.

The dehaloagenation reaction yield is 76%.

### Characterization of products C' and D'

Boiling range of the mixture of isomers C' 79%, D' 21% at atmospheric pressure: 90.0°-92.0°C.

¹⁹F-NMR spectrum in p.p.m. (with respect to CFCl₃=0) of the isomer C' perfluoro-1,2-dihydro-3,5,8-trioxa-1-nonene:

| | |
|---|---|
| -55.7 (3F, CF₃-O); | -57.3 (2F, O-CF₂-O); |
| -90.9 (2F, C-CF₂-O); | -91.2 (2F, O-CF₂-C); |
| -149.3/-150.0 (1F, O-C=C-F). | |

¹⁹F-NMR spectrum in p.p.m. (with respect to CFCl₃=0) of the isomer D' perfluoro-1,2-dihydro-3,5,7-trioxa-6-methyl-1-octene:

| | |
|---|---|
| -55.0 (3F, CF₃-O); | -56.9 (2F, O-CF₂-O); |
| -86.2 (3F, CF₃-C); | -101.0 (1F, CF)_{.} |
| -149.3/-150,0 (1F, O-C=C-F) | |

Mass spectrum (electronic impact), main peaks and respective intensities %:
69 (82); 119 (100); 185 (29); 246 (25); 251 (20); 312 (43).

IR spectrum (cm⁻¹) intensity of the isomer mixture (C' 79%, D' 21%) : (w)=weak, (m)=medium, (s)=strong, (vs)=very strong:
3140 (w); 1722 (w); 1695 (w); 1402 (m); 1281 (vs); 1237 (vs); 1147 (vs); 1106 (vs); 1030 (m).

### EXAMPLE 7

### Homopolymerization of perfluoro-3,5-dioxa-1-heptene (MOVE 1).

In a glass reactor for polymerizations, having a 20 ml volume, equipped with magnetic stirring and with an inlet for the reactant feeding and discharge, 60 µl of perfluoropropionylperoxide at 3% by weight in CFCl₂CF₂Cl and 3 g of MOVE 1 are in sequence introduced. The so charged reactor is brought to the temperature of -196°C, evacuated, brought to room temperature, the all twice. At the end of the degassing operations the reactor is thermostated at the temperature of 30°C and the mixture is allowed to react under these conditions for two days under magnetic stirring.

The reaction raw material which is finally recovered appears as a slightly viscous, transparent, colourless and homogeneous solution.

After distillation of the unreacted monomer, and subsequent stripping under vacuum at 150°C for 3 hours, 180 mg of the polymer are separated.

The IR analysis of the obtained polymer shows that, in the spectrum, absorption bands in the zone of the fluorinated double bonds are absent.

The ¹⁹F-NMR analysis carried out on the polymer dissolved in C₆F₆ is in accordance with the homopolymer structure having a molecular weight of 50,000. The analysis does not show the presence of unreacted monomer.

The DSC graph does not show any melting endothermic curve, wherefore the polymer is amorphous. The polymer T_{g}, determined by DSC, is -35.4°C. The thermogravimetric analysis (TGA) shows a weight loss of 2% at 332°C and of 10% at 383°C.

### EXAMPLE 8

### Copolymer between perfluoro-3,5,8-trioxa-1-nonene CF₃OCF₂CF₂OCF₂₀CF=CF₂ (MOVE 2) and perfluoro-3,5,7-trioxa-6, methyl-1-octene CF₃OCF(CF₃)OCF₂O-CF=CF₂ (MOVE 2a).

In a reactor having the same characteristics as that described in Example 7, 150 µl of perfluoropropionylperoxide at 3% by weight in CFCl₂CF₂Cl and 3.2 g of a mixture prepared according to the process of Example 5 and containing 83% MOVE 2 and 17% MOVE 2a, are introduced. The reactor is then evacuated, cooled, and the subsequent reaction carried out as described in the previous Example 7.

The reaction raw material appears as a slightly viscous, transparent, colourless and homogeneous solution. The monomers which have not reacted are distilled and a stripping under vacuum at 150°C for 3 hours is in sequence carried out. Finally 350 mg of the polymer are separated.

The IR analysis shows that, in the polymer spectrum, absorption bands in the zone of the fluorinated double bonds are absent.

The ¹⁹F-NMR analysis is in accordance with the copolymer structure having an average molecular weight of 35,000 and a MOVE 2/MOVE 2a content equal to the percentages of the reacting mixture; unreacted monomers are not evident.

The DSC graph does not show any melting endothermic curve, wherefore the polymer is amorphous. The polymer T_{g}, determined by DSC, is -52.6°C. The thermogravimetric analysis (TGA) shows a weight loss of 2% at 280°C and of 10% at 327°C.

### EXAMPLE 9

### Amorphous copolymer between MOVE 1 and TFE.

In an AISI-316 polymerization reactor having a 40 ml volume, equipped with magnetic stirring, pressure transducer and an inlet for the reactant feeding and discharge, 250 µl of perfluoropropionylperoxide at 3% by weight in CFCl₂CF₂Cl, 9.8 mmoles of MOVE 1 and 18 mmoles of tetrafluoroethylene are introduced.

The reactor is cooled to the temperature of -196°C, evacuated, then brought to room temperature and cooled again, the all twice.

At the end of the degassing operations the reactor is thermostated at the temperature of 30°C and the reaction mixture maintained under magnetic stirring. The internal pressure decreases from 6.4 atm to 4.7 atm in about 8 hours (reaction time).

After distillation of the unreacted monomers, and polymer stripping under vacuum for 3 hours at 150°C, 1,100 mg of polymer are recovered, which appears as a transparent and colourless rubber.

By ¹⁹F-NMR analysis of the polymer dissolved under heating in C₆F₆ it is determined that the MOVE 1 molar percentage in the polymer is 24%.

The IR analysis does not show, in the polymer spectrum, absorption bands in the zone of the fluorinated double bonds, and shows the presence of very small absorption bands in the zone of the carboxyl signals. The intensity of these signals, compared with the similar ones obtained from a film having the same thickness obtained with the polymer of the comparative Example 1, is equal to about 1/10 of these latter.

The DSC graph does not show any melting endothermic curve, wherefore the polymer is amorphous. The T_{g} determined by DSC is -21.4°C.

The TGA shows a weight loss of 2% at 450°C and of 10% at 477°C. The polymer therefore results thermally more stable with respect to the comparative Example (see afterwards).

The polymer intrinsic viscosity measured at 30°C in Fluorinert^{®} FC-75, is 35.5 ml/g.

### EXAMPLE 10

### Amorphous copolymer between MOVE 1 and TFE.

In an AISI-316 polymerization reactor identical to that described in the previous Example 9, 250 µl of perfluoropropionylperoxide at 3% by weight in CFCl₂CF₂Cl, 9.75 mmoles of MOVE 1 and 9 mmoles of tetrafluoroethylene are in sequence introduced.

The procedure already described in the previous Example 9 is then followed until the thermostating step at the temperature of 30°C under magnetic stirring. During the reaction the internal pressure decreases from 3.4 atm to 2.9 atm in about 8 hours.

At the end the unreacted monomers are distilled and the polymer is stripped under vacuum at 150°C for 3 hours.

480 mg of the polymer are separated.

By ¹⁹F-NMR analysis of the polymer dissolved under heating in C₆F₆ it is determined that the MOVE 1 molar percentage in the polymer is 39%.

The IR analysis shows that, in the polymer spectrum, absorption bands in the zone of the fluorinated double bonds are absent.

The DSC graph does not show any melting endothermic curve, wherefore the polymer is amorphous. The T_{g} determined by DSC is -29.8°C.

The TGA shows a weight loss of 10% at 435°C.

### EXAMPLE 11

### Amorphous copolymer between MOVE 1 and CF₂=CH₂

In a polymerization reactor identical to that described in Example 9, 250 µl of perfluoropropionylperoxide at 3% by weight in CFCl₂CF₂Cl, 10 mmoles of MOVE 1 and 18 mmoles of VDF are in sequence introduced.

The procedure already described in the previous Example 9 is followed until the thermostating step at the temperature of 30°C under magnetic stirring. The internal pressure decreases from 6.8 atm to 5.0 atm during the reaction (about 8 hours).

After distillation of the unreacted monomers, and subsequent polymer stripping under vacuum at 150°C for 3 hours, 1,600 mg of the polymer are separated, appearing as a transparent and colourless rubber.

By the ¹⁹F-NMR analysis carried out on the polymer dissolved in C₆F₆ it is determined that the MOVE 1 molar percentage in the polymer is 40%.

The DSC graph does not show any melting endothermic curve, wherefore the polymer is amorphous. The T_{g} determined by DSC, is -47°C.

The TGA shows a weight loss of 2% at 428°C and of 10% at 455°C.

### EXAMPLE 12

### Amorphous terpolymer MOVE 2/MOVE 2a/TFE.

In a polymerization reactor identical to that described in Example 9, 100 µl of perfluoropropionylperoxide at 6% by weight in CFCl₂CF₂Cl, 10 mmoles of a MOVE 2 (83%) and MOVE 2a (17%) mixture sinthetized according to the process of Example 5, and 18 mmoles of tetrafluoroethylene (TFE) are in sequence introduced.

The procedure already described in the previous Example 9 is then followed until thermostating at the temperature of 30°C under magnetic stirring. The internal pressure decreases from 6.1 atm to 3.9 atm during the reaction (about 8 hours).

After distillation of the unreacted monomers and polymer stripping under vacuum at 150°C for 3 hours, the polymer is separated.

By the ¹⁹F-NMR analysis carried out on the polymer dissolved in C₆F₆ it results that the total molar percentage of the MOVE 2 + MOVE 2a perfluorovinylethers in the polymer is 22%; the MOVE 2/MOVE 2a ratio by moles in the polymer is 83/17 and it is equal to that of the starting fed mixture.

The presence of unreacted monomers is not evident.

The IR analysis does not show, in the polymer spectrum, absorption bands in the zone of the fluorinated double bonds, and it shows the presence of very small absorption bands in the zone of the carboxyl signals. The intensity of these signals, compared with the similar ones obtained from a film having the same thickness obtained with the polymer of the comparative Example 1, is equal to about 1/10 of the latter.

The DSC graph does not show any melting endothermic curve, wherefore the polymer is amorphous. The T_{g} determined by DSC, is -37.5°C.

The TGA shows a weight loss of 10% at 473°C.

The polymer intrinsic viscosity measured at 30°C in Fluorinert® FC-75, is 40.0 ml/g.

### EXAMPLE 13

### Amorphous terpolymer MOVE 2/MOVE 2a/TFE.

In a polymerization reactor identical to that described in Example 9, 100 µl of perfluoropropionylperoxide at 6% by weight in CFCl₂CF₂Cl, 9.7 mmoles of the MOVE 2 (83%) and MOVE 2a (17%) mixture sinthetized according to the process of Example 5, and 10 mmoles of tetrafluoroethylene (TFE) are in sequence introduced.

The procedure already described in the previous Example 9 is then followed until the thermostating step at the temperature of 30°C under magnetic stirring. The internal pressure decreases from 3.6 atm to 2.7 atm during the reaction (about 8 hours).

After distillation of the unreacted monomers and polymer stripping under vacuum at 150°C for 3 hours 652 mg of polymer are separated.

By the ¹⁹F-NMR analysis carried out on the polymer dissolved in C₆F₆ it results that the total molar percentage of the MOVE 2 + MOVE 2a perfluorovinylethers in the polymer is 37%; the MOVE 2/MOVE 2a molar ratio in the polymer is 83/17 and it is equal to that of the starting fed mixture.

The presence of unreacted monomers is not evident.

The IR analysis does not show, in the polymer spectrum, absorption bands in the zone of the fluorinated double bonds.

The DSC graph does not show any melting endothermic curve, wherefore the polymer is amorphous. The T_{g} determined by DSC, is -44.5°C.

The TGA shows a weight loss of 10% at 451°C.

The polymer intrinsic viscosity measured at 30°C in Fluorinert^{®} FC-75, is 16.7 ml/g.

### EXAMPLE 14

### Amorphous copolymer between perfluoro-1,2-dihydro-3,5,8-trioxa-1-nonene (H-MOVE 2) and perfluoro-1,2-dihydro-3,5,7-trioxa-6-methyl-1-octene (H-MOVE 2a) with molar ratio 88/12.

In a reactor identical to that described in Example 7, 200 µl of perfluoropropionylperoxide at 3% by weight in CFCl₂-CF₂Cl and 3.1 g of a H-MOVE 2/H-MOVE 2a 88/12 mixture are introduced.

The procedure described in Example 7 is followed.

The recovered reaction raw material appears as a slightly viscous, transparent, colourless and homogeneous solution.

After distillation of the unreacted monomer and subsequent stripping under vacuum at 150°C for 3 hours, 120 mg of polymer are separated.

The IR analysis of the obtained polymer shows that, in the polymer spectrum, absorption bands in the zone of the fluorinated double bonds are absent.

The ¹⁹F-NMR analysis is in accordance with the copolymer structure having a content of monomers H-MOVE 2 and H-MOVE 2a equal to the H-MOVE 2 and H-MOVE 2a percentages in the reacting mixture. The analysis does not show the presence of unreacted monomers.

The DSC graph does not show any melting endothermic curve, wherefore the polymer is amorphous. The polymer T_{g} determined by DSC, is -58.0°C. The thermogravimetric analysis (TGA) shows a weight loss of 10% at 307°C.

### EXAMPLE 15

### Terpolymer H-MOVE 2/H-MOVE 2a/TFE.

In a reactor similar to that described in Example 9, 100 µl of perfluoropropionylperoxide at 6% by weight in CFCl₂-CF₂Cl and 5 mmoles of a H-MOVE 2 (88%) and H-MOVE 2a (12%) mixture and 18 mmoles of tetrafluoroethylene, are introduced.

The same procedure described in Example 9 is followed.

At the end of the degassing, the reactor is thermostated at the temperature of 30°C under magnetic stirring. The internal pressure decreases from 6.8 atm to 6.5 atm in about 6 hours (reaction time).

After distillation of the unreacted monomers, and polymer stripping under vacuum at 150°C for 3 hours, 300 mg of the polymer are separated.

By ¹⁹F-NMR analysis of the polymer dissolved under heating in C₆F₆ it is calculated that the molar percentage of the perfluorovinylethers (H-MOVE 2 + H-MOVE 2a) contained in the polymer is 33%. The H-MOVE 2/H-MOVE 2a molar ratio in the polymer is equal to the H-MOVE 2/H-MOVE 2a molar ratio of the fed mixture. Unreacted monomers are not evident.

The IR analysis does not show, in the polymer spectrum, absorption bands in the zone of the fluorinated double bonds.

The DSC graph does not show any melting endothermic curve wherefore the polymer is amorphous. The T_{g} determined by DSC, is -44.5°C.

The TGA shows a weight loss of 10% at 450°C.

### EXAMPLE 1 (comparative)

### Copolymer PVE/TFE.

In a polymerization reactor identical to that described in Example 9, 250 µl of perfluoropropionylperoxide at 3% by weight in CFCl₂CF₂Cl, 9.8 mmoles of PVE and 18 mmoles of tetrafluoroethylene, are in sequence introduced.

The procedure already described in the previous Example 9 is followed until thermostating at the temperature of 30°C under magnetic stirring. The reaction time is of eight hours.

After distillation of the unreacted monomers and stripping under vacuum at 150°C for 3 hours, 540 mg of polymer are recoverd.

By the ¹⁹F-NMR analysis carried out on the polymer dissolved in C₆F₆ it is calculated that the PVE molar percentage in the polymer is 23%.

The IR analysis shows that, in the polymer spectrum, there are absorption bands in the carboxyl zone, whose intensity is 10 times higher than that obtained from a MOVE 1/TFE copolymer film prepared according to Example 9, and having the same thickness.

The DSC graph does not show any melting endothermic curve, wherefore the polymer is amorphous. The TGA shows a weight loss of 2% at 427°C and of 10% at 463°C. The Tg, determined by DSC, is + 15°C.

The polymer intrinsic viscosity, measured at 30°C in Fluorinert® FC-75, is 51 ml/g.

### EXAMPLE 2 (comparative)

### Copolymer between β-PDE (CF₃OCF₂CF₂OCF=CF₂)/TFE.

In a polymerization reactor identical to that described in Example 9, 250 µl of perfluoropropionylperoxide at 3% by weight in CFCl₂-CF₂Cl, 10 mmoles of β-PDE and 18 mmoles of tetrafluoroethylene, are in sequence introduced.

The procedure described in the previous Example 9 is followed until the thermostating step at the temperature of 30°C under magnetic stirring.

By the ¹⁹F-NMR analysis carried out on the polymer purified from the monomers by the processes described in the previous Examples, it is calculated that the molar percentage of β-PDE in the polymer is 23%.

The DSC graph does not show any melting endothermic curve wherefore the polymer is amorphous. The T_{g}, determined by DSC, is -4.8°C. This Tg value is clearly higher than those obtainable with the vinylethers of the invention (see above).

## Claims

1. Fluoroelastomers comprising in the polymer chain units deriving from fluorovinylethers of formula:
CFX=CXOCF₂OR (I)
wherein R is a C₂-C₆ linear, branched or C₅-C₆ cyclic (per) fluoroalkyl group, or a C₂-C₆ linear, branched (per) - fluoro oxyalkyl group containing from one to three oxygen atoms; when R is a fluoroalkyl or fluorooxyalkyl group as above defined it can contain from 1 to 2 atoms, equal to or different from each other, selected from the following: H, Cl, Br, I; X = F, H, wherein the amount of fluorovinylethers is higher than 10% by moles, preferably in the range 15-20% by moles, or higher.

2. Fluoroelastomers according to claim 1, comprising in the polymer chain units deriving from fluorovinylethers of formula:
CFX=CXOCF₂OCF₂CF₂Y (II)
wherein Y = F, OCF₃; X as above defined.

3. Fluoroelastomers according to claims 1 and 2, comprising in the polymer chain units deriving from fluorovinylethers of formula:
CF₂=CFOCF₂OCF₂CF₂Y (III)
wherein Y is as above defined.

4. Fluoroelastomers according to claims 1-3, comprising in the polymer chain units deriving from fluorovinylethers of formula:
CF₂=CFOCF₂OCF₂CF₃ (IV)

5. Fluoroelastomers according to claims 1-4, wherein the comonomers are fluorinated compounds having at least one polymerizable double bond C=C, optionally containing in the molecule hydrogen and/or chlorine and/or bromine and/or iodine and/or oxygen, said comonomers being able to produce (co)polymers in the presence of radical initiators.

6. Fluoroelastomers according to claim 5, wherein optional copolymerizable comonomers are non fluorinated C₂-C₈ olefins, preferably ethylene, propylene, isobutylene.

7. Fluoroelastomers according to claims 5-6, wherein the comonomers are selected from one or more of the following:
- C₂-C₈ perfluoroolefins, preferably tetrafluoroethylene (TFE), hexafluoropropene (HFP), hexafluoroisobutene;
- C₂-C₈ hydrogenated fluoroolefins, preferably vinyl fluoride (VF), vinylidene fluoride (VDF), trifluoroethylene, CH₂=CH-R²_{f} perfluoroalkylethylenes, wherein R²_{f} is a C₁-C₆ perfluoroalkyl;
- C₂-C₈ chloro- and/or bromo- and/or iodo-fluoroolefins, preferably chlorotrifluoroethylene (CTFE) and bromotrifluoroethylene;
- CF₂=CFOR²_{f} (per) fluoroalkylvinylethers (PAVE), wherein R²_{f} is a C₁-C₆ (per)fluoroalkyl, preferably trifluoromethyl, bromodifluoromethyl or heptafluoropropyl;
- CF₂=CFOX^{a} (per) fluoro-oxyalkylvinylethers, wherein X^{a} is a C₁-C₁₂ alkyl, or a C₁-C₁₂ oxyalkyl, or a C₁-C₁₂ (per) fluorooxyalkyl having one or more ether groups, preferably perfluoro-2-propoxy-propyl;
- sulphonic monomers having the structure CF₂=CFOX^{b}SO₂F, wherein X^{b} = CF₂CF₂, CF₂CF₂CF₂, CF₂CF(CF₂X^{c}) wherein X^{c} = F, Cl, Br.
- a bis-olefin having the general formula
R^{I}₁R^{I}₂ C=CR^{I}₃-Z-CR^{I}₄=CR^{I}₅R^{I}₆ (IA)
wherein
R^{I}₁, R^{I}₂, R^{I}₃, R^{I}₄, R^{I}₅, R^{I}₆ equal to or different from each other, are H or C₁-C₅ alkyls;
Z is a C₁-C₁₈ linear or branched alkylene or cycloalkylene radical, optionally containing oxygen atoms, preferably at least partially fluorinated, or a (per)fluoropolyoxyalkylene radical.

8. Fluoroelastomers acording to claim 7, wherein in the bis-olefin of formula (IA), Z is a C₄-C₁₂ perfluoroalkylene radical and R^{I}₁, R^{I}₂, R^{I}₃, R^{I}₄, R^{I}₅, R^{I}₆ are hydrogen.

9. Fluoroelastomers according to claims 7-8, wherein in the bis-olefin of formula (IA) Z is a (per)fluoropolyoxyalkylene radical, having the formula:
- (Q)ₚ-CF₂O-(CF₂CF₂O)ₘₐ(CF₂O)ₙₐ-CF₂-(Q)ₚ- (IIA)
wherein:
Q is a C₁-C₁₀ alkylene or oxyalkylene radical;
p is 0 or 1;
ma ed na are integers such that the ma/na ratio is comprised between 0.2 and 5 and the molecular weight of said (per)fluoropolyoxyalkylene radical is in the range from 500 to 10,000, preferably from 1,000 to 4,000.

10. Fluoroelastomers according to claims 7-9, wherein in the bis-olefin of formula (IA) Q is selected from the following groups:
-CH₂OCH₂-; -CH₂O(CH₂CH₂O)ₛCH₂-, with s = 1-3.

11. Fluoroelastomers according to claims 7-10, wherein the amount in the chain of units deriving from the bis-olefin of formula (IA) is in the range 0.01-1.0 by moles.

12. Fluoroelastomers according to claims 1-11, wherein the base fluoroelastomer structure is selected from:
(1) copolymers based on VDF copolymerized with at least one comonomer selected from C₂-C₈ perfluoroolefins preferably tetrafluoroethylene (TFE), hexafluoropropene (HFP); C₂-C₈ chloro- and/or bromo- and/or iodo-fluoroolefins, preferably chlorotrifluoroethylene (CTFE) and bromotrifluoroethylene; CF₂=CFOR^{t}_{f} (per)fluoroalkylvinylethers (PAVE), wherein R^{t}_{f} is a C₁-C₆ (per)fluoroalkyl, preferably trifluoromethyl, bromodifluoromethyl, pentafluoropropyl; CF₂=CFOX^{t} perfluoro-oxyalkylvinylethers, wherein X^{t} is a C₁-C₁₂ perfluoro-oxyalkyl having one or more ether groups, preferably perfluoro-2-propoxy-propyl; C₂-C₈ non fluorinated olefins (Ol), preferably ethylene and propylene;
(2) copolymers based on TFE copolymerized with at least one comonomer selected from: CF₂=CFOR^{t}_{f} (per)fluoroalkyl-vinylethers (PAVE), wherein R^{t}_{f} is as above defined; CF₂=CFOX^{t} perfluoro-oxyalkylvinylethers, wherein X^{t} is as above defined; C₂-C₈ fluoroolefins containing hydrogen and/or chlorine and/or bromine and/or iodine atoms; _{C2}-C₈ non fluorinated olefins (Ol).

13. Fluoroelastomers according to claim 12, having the following base monomeric compositions (by moles):
| | |
|---|---|
| VDF | 45-85 |
| HFP and/or PAVE | 0-45 |
| TFE | 0-30 |
| MOVE higher than 10 up to 45, preferably up to 40 | |
| Ol | 0-40 |
the sum of HFP+PAVE+MOVE being at most 45%.

14. Fluoroelastomers according to claims 12-13, curable by peroxidic route, optionally in the presence of small amounts of a bis-olefin as above indicated, said fluoroelastomers preferably containing reactive sites, i.e. iodine and/or bromine in the chain, preferably iodine, and/or using an iodinated and/or brominated transfer agent.

15. Fluoroelastomers according to claim 12, having the following base monomeric compositions (by moles):
| | |
|---|---|
| TFE | 50-85 |
| PAVE | 0-50 |
| MOVE higher than 10 up to 50, preferably up to 40 | |
| Ol | 0-40 |
the sum of PAVE+MOVE being at most 50.

16. Fluoroelastomers according to claims 11-13, curable by ionic route, having the following compositions (expressed by moles):
when the fluoroelastomer is used for preparing shaft seals or fuel hoses:
| | |
|---|---|
| VDF | 30-47 |
| HFP | 20-40 |
| PAVE | 0-17 |
| TFE | 10-30 |
| MOVE higher than 10 up to 20 | |
the sum PAVE+MOVE lower than or equal to 20% by moles.

17. Use of fluoroelastomers according to claims 1-16 for preparing O-rings, shaft seals, fuel hoses.

## Patentansprüche

1. Fluorelastomere, die in der Polymerkette Einheiten, die sich von Fluorvinylethern der Formel:
CFX=CXOCF₂OR (I)
worin R für eine lineare oder verzweigte C₂-C₆-(Per)fluoralkylgruppe oder eine cyclische C₅-C₆-(Per)fluoralkylgruppe oder eine lineare oder verzweigte C₂-C₆-(Per)fluoroxyalkylgruppe mit einem bis drei Sauerstoffatomen steht; wenn R für eine Fluoralkyl- oder Fluoroxyalkylgruppe gemäß obiger Definition steht, kann es 1 bis 2 Atome, die gleich oder verschieden sind und unter H, Cl, Br, I ausgewählt sind, enthalten; X = F, H, ableiten, umfassen, worin die Menge an Fluorvinylethern mehr als 10 Mol-% beträgt und vorzugsweise im Bereich von 15-20 Mol-% oder mehr liegt.

2. Fluorelastomere nach Anspruch 1, die in der Polymerkette Einheiten, die sich von Fluorvinylethern der Formel:
CFX=CXOCF₂OCF₂CF₂Y (II)
worin Y = F, OCF₃ und X die oben angegebene Bedeutung besitzt, ableiten, umfassen.

3. Fluorelastomere nach den Ansprüchen 1 und 2, die in der Polymerkette Einheiten, die sich von Fluorvinylethern der Formel:
CF₂=CFOCF₂OCF₂CF₂Y (III)
worin Y die oben angegebene Bedeutung besitzt, ableiten, umfassen.

4. Fluorelastomere nach den Ansprüchen 1-3, die in der Polymerkette Einheiten, die sich von Fluorvinylethern der Formel:
CF₂=CFOCF₂OCF₂CF₃ (IV)
ableiten, umfassen.

5. Fluorelastomere nach den Ansprüchen 1-4, worin es sich bei den Comonomeren um fluorierte Verbindungen mit mindestens einer polymerisierbaren C=C-Doppelbindung, die gegebenenfalls Wasserstoff und/oder Chlor und/oder Brom und/oder Iod und/oder Sauerstoff im Molekül enthalten, handelt, wobei die Comonomere zur Produktion von (Co)polymeren in Gegenwart von radikalbildenden Initiatoren in der Lage sind.

6. Fluorelastomere nach Anspruch 5, worin es sich bei fakultativen copolymerisierbaren Comonomeren um nichtfluorierte C₂-C₈-Olefine, vorzugsweise Ethylen, Propylen und Isobutylen, handelt.

7. Fluorelastomere nach den Ansprüchen 5-6, worin die Comonomere unter einem oder mehreren der folgenden ausgewählt sind :
- C₂-C₈-Perfluorolefinen, vorzugsweise Tetrafluorethylen (TFE), Hexafluorpropen (HFP) und Hexafluorisobuten;
- hydrierten C₂-C₈-Fluorolefinen, vorzugsweise Vinylfluorid (VF), Vinylidenfluorid (VDF), Trifluorethylen, Perfluoralkylethylenen CH₂=CH-R²_{f}, worin R²_{f} für C₁-C₆-Perfluoralkyl steht;
- C₂-C₈-Chlor- und/oder -Brom- und/oder -Iodfluor-olefinen, vorzugsweise Chlortrifluorethylen (CTFE) und Bromtrifluorethylen;
- (Per)fluoralkylvinylethern (PAVE) CF₂=CFOR²_{f}, worin R²_{f} für C₁-C₆-Perfluoralkyl, vorzugsweise Trifluormethyl, Bromdifluormethyl oder Heptafluorpropyl, steht;
- (Per)fluoroxyalkylvinylethern CF₂=CFOX^{a}, worin X^{a} für C₁-C₁₂-Alkyl, C₁-C₁₂-Oxyalkyl oder C₁-C₁₂-(Per)fluoroxyalkyl mit einer oder mehreren Ethergruppen, vorzugsweise Perfluor-2-propoxypropyl, steht;
- Sulfonmonomeren der Struktur CF₂=CFOX^{b}SO₂F, worin X^{b} = CF₂CF₂, CF₂CF₂CF₂, CF₂CF(CF₂X^{c}), worin X^{c} = F, Cl, Br;
- einem Bisolefin der allgemeinen Formel
R^{I}₁R^{I}₂ C=CR^{I}₃-Z-CR^{I}₄=CR^{I}₅R^{I}₆ (IA)
worin
R^{I}₁, R^{I}₂, R^{I}₃, R^{I}₄, R^{I}₅ und R^{I}₆ gleich oder voneinander verschieden sind und für H oder C₁-C₅-Alkylgruppen stehen;
Z für einen linearen oder vezweigten C₁-C₁₈-Alkylen- oder -Cycloalkylenrest, der gegebenenfalls Sauerstoffatome enthält und vorzugsweise mindestens teilfluoriert ist, oder einen (Per)fluorpolyoxyalkylenrest steht.

8. Fluorelastomere nach Anspruch 7, worin in dem Bisolefin der Formel (IA) Z für einen C₄-C₁₂-Perfluoralkylenrest steht und R^{I}₁, R^{I}₂, R^{I}₃, R^{I}₄, R^{I}₅ und R^{I}₆ für Wasserstoff stehen.

9. Fluorelastomere nach den Ansprüchen 7-8, worin in dem Bisolefin der Formel (IA) Z für einen (Per)fluorpolyoxyalkylenrest der Formel:
-(Q)ₚ-CF₂O-(CF₂CF₂O)ₘₐ(CF₂O)ₙₐ-CF₂-(Q)ₚ (IIA)
worin :
Q einen C₁-C₁₀-Alkylen- oder -Oxyalkylenrest bedeutet;
p 0 oder 1 ist;
ma und na ganze Zahlen mit einem solchen Wert sind, daß das Verhältnis ma/na zwischen 0,2 und 5 liegt und das Molekulargewicht des (Per)fluorpolyoxyalkylenrests im Bereich von 500 bis 10.000 und vorzugsweise 1.000 bis 4.000 liegt, steht.

10. Fluorelastomere nach den Ansprüchen 7-9, worin in dem Bisolefin der Formel (IA) Q unter den folgenden Gruppen ausgewählt ist:
- CH₂OCH₂-; -CH₂O(CH₂CH₂O)ₛCH₂- mit s = 1-3.

11. Fluorelastomere nach den Ansprüchen 7-10, worin die Menge an Einheiten, die sich von dem Bisolefin der Formel (IA) ableiten, in der Kette im Bereich von 0,01-1,0 Mol liegt.

12. Fluorelastomere nach den Ansprüchen 1-11, worin die Fluorelastomer-Grundstruktur unter :
(1) Copolymeren auf Basis von VDF, copolymerisiert mit mindestens einem unter C₂-C₈-Perfluorolefinen, vorzugsweise Tetrafluorethylen (TFE) und Hexafluorpropen (HFP); C₂-C₈-Chlor- und/oder -Brom- und/oder Iodfluor-olefinen, vorzugsweise Chlortrifluorethylen (CTFE) und Bromtrifluorethylen; (Per)fluoralkylvinylethern (PAVE) CF₂=CFOR^{t}_{f}, worin R^{t}_{f} für C₁-C₆-Perfluoralkyl, vorzugsweise Trifluormethyl, Bromdifluormethyl oder Pentafluorpropyl, steht;
(Per)fluoroxyalkylvinylethern CF₂=CFOX^{t}, worin X^{t} für C₁-C₁₂-Perfluoroxyalkyl mit einer oder mehreren Ethergruppen, vorzugsweise Perfluor-2-propoxypropyl, steht; und nichtfluorierten C₂-C₈-Olefinen (Ol), vorzugsweise Ethylen und Propylen ausgewählten Comonomer;
(2) Copolymeren auf Basis von TFE, copolymerisiert mit mindestens einem unter (Per)fluoralkylvinylethern (PAVE) CF₂=CFOR^{t}_{f}, worin R^{t}_{f} die oben angegebene Bedeutung besitzt; (Per)fluoroxyalkylvinylethern CF₂=CFOX^{t}, worin X^{t} die oben angegebene Bedeutung besitzt; C₂-C₈-Fluorolefinen, die Wasserstoff und/oder Chlor- und/oder Brom- und/oder Iodatome enthalten; und nichtfluorierten C₂-C₈-Olefinen (Ol) ausgewählten Comonomer
ausgewählt ist.

13. Fluorelastomere nach Anspruch 12 mit den folgenden Monomerengrundzusammensetzungen (auf Mol bezogen) :
| | |
|---|---|
| VDF | 45-85 |
| HFP und/oder PAVE | 0-45 |
| TFE | 0-30 |
| MOVE mehr als 10 bis 45, vorzugsweise bis 40 | |
| Ol | 0-40, |
wobei die Summe von HFP+PAVE+MOVE höchstens 45% beträgt.

14. Fluorelastomere nach den Ansprüchen 12-13, die auf peroxidischem Weg härtbar sind, gegebenenfalls in Gegenwart von kleinen Mengen eines Bisolefins gemäß obigen Angaben, wobei die Fluorelastomere vorzugsweise reaktive Stellen, d.h. Iod und/oder Brom in der Kette, vorzugsweise Iod, enthalten, und/oder unter Verwendung eines iodierten und/oder bromierten Übertragungsmittels.

15. Fluorelastomere nach Anspruch 12 mit den folgenden Monomerengrundzusammensetzungen (auf Mol bezogen) :
| | |
|---|---|
| TFE | 50-85 |
| PAVE | 0-50 |
| MOVE mehr als 10 bis 50, vorzugsweise bis 40 | |
| Ol | 0-40, |
wobei die Summe von PAVE+MOVE höchstens 50 beträgt.

16. Fluorelastomere nach den Ansprüchen 11-13, die auf ionischem Weg härtbar sind, mit den folgenden Zusammensetzungen (ausgedrückt in Mol) :
wenn das Fluorelastomer zur Herstellung von Wellendichtungen oder Kraftstoffschläuchen verwendet wird :
| | |
|---|---|
| VDF | 30-47 |
| HFP | 20-40 |
| PAVE | 0-17 |
| TFE | 10-30, |
| MOVE mehr als 10 bis 20, | |
wobei die Summe von PAVE+MOVE höchstens kleiner gleich 20 Mol-% ist.

17. Verwendung von Fluorelastomeren nach den Ansprüchen 1-16 zur Herstellung von O-Ringen, Wellendichtungen und Kraftstoffschläuchen.

## Revendications

1. Elastomères fluorés comprenant, dans la chaîne polymère, des motifs dérivés d'éthers fluorovinyliques de formule :
CFX=CXOCF₂OR (I)
dans laquelle R est un groupe (per)fluoroalkyle linéaire en C₂-C₆, ramifié ou cyclique en C₅-C₆, ou un groupe (per)fluorooxyalkyle linéaire en C₂-C₆, ou ramifié, renfermant un à trois atomes d'oxygène ; lorsque R est un groupe fluoroalkyle ou fluorooxyalkyle tel que défini ci-dessus, il peut renfermer de 1 à 2 atomes, identiques ou différents l'un de l'autre, choisis parmi les suivants : un atome d'hydrogène, un atome de chlore, un atome de brome, un atome d'iode ;
X = un atome de fluor, un atome d'hydrogène, où la quantité d'éthers fluorovinyliques est supérieure à 10 % en moles, de préférence dans la plage de 15 à 20 % en moles, ou plus.

2. Elastomères fluorés selon la revendication 1, comprenant, dans la chaîne polymère, des motifs dérivés d'éthers fluorovinyliques de formule :
CFX=CXOCF₂OCF₂CF₂Y (II)
dans laquelle Y = un atome de fluor, un groupe OCF₃ ; X est tel que défini ci-dessus.

3. Elastomères fluorés selon les revendications 1 et 2, comprenant, dans la chaîne polymère, des motifs dérivés d'éthers fluorovinyliques de formule :
CF₂=CFOCF₂OCF₂CF₂Y (III)
dans laquelle Y est tel que défini ci-dessus.

4. Elastomères fluorés selon les revendications 1 à 3, comprenant, dans la chaîne polymère, des motifs dérivés d'éthers fluorovinyliques de formule :
CF₂=CFOCF₂OCF₂CF₃ (IV).

5. Elastomères fluorés selon les revendications 1 à 4, dans lesquels les comonomères sont des composés fluorés renfermant au moins une double liaison C=C polymérisable, et renfermant éventuellement dans la molécule de l'hydrogène et/ou du chlore et/ou du brome et/ou de l'iode et/ou de l'oxygène, lesdits comonomères étant capables de produire des (co)polymères en présence d'amorceurs radicalaires.

6. Elastomères fluorés selon la revendication 5, dans lesquels des comonomères copolymérisables éventuels sont des oléfines en C₂-C₈, non fluorées, de préférence l'éthylène, le propylène, l'isobutylène.

7. Elastomères fluorés selon les revendications 5 à 6, dans lesquels les comonomères sont choisis parmi l'un ou plusieurs des suivants :
- des perfluorooléfines en C₂-C₈, de préférence le tétrafluoroéthylène (TFE), l'hexafluoropropène (HFP), l'hexafluoroisobutène ;
- des fluorooléfines hydrogénées en C₂-C₈, de préférence le fluorure de vinyle (VF), le fluorure de vinylidène (VDF), le trifluoroéthylène, des perfluoroalkyléthylènes CH₂=CH-R²_{f}, dans lesquels R²_{f} est un groupe perfluoroalkyle en C₁-C₆ ;
- des chloro- et/ou bromo- et/ou iodo-fluorooléfines en C₂-C₈, de préférence le chlorotrifluoroéthylène (CTFE) et le bromotrifluoroéthylène ;
- des éthers (per)fluoroalkylvinyliques (PAVE) CF₂=CFOR²_{f}, dans lesquels R²_{f} est un groupe (per)fluoroalkyle en C₁-C₆, de préférence un groupe trifluorométhyle, un groupe bromodifluorométhyle ou un groupe heptafluoropropyle ;
- des éthers (per)fluoro-oxyalkylvinyliques CF₂=CFOX^{a}, dans lesquels X^{a} est un groupe alkyle en C₁-C₁₂, ou un groupe oxyalkyle en C₁-C₁₂, ou un groupe (per)fluorooxyalkyle en C₁-C₁₂ renfermant un ou plusieurs groupes éther, de préférence un groupe perfluoro-2-propoxypropyle ;
- des monomères sulfoniques de structure CF₂=CFOX^{b}SO₂F, dans laquelle X^{b} = un groupe CF₂CF₂, un groupe CF₂CF₂CF₂, un groupe CF₂CF(CF₂X^{c}), dans lequel X^{c} = un atome de fluor, un atome de chlore, un atome de brome ;
- une bis-oléfine de formule générale
R^{I}₁R^{I}₂ C=CR^{I}₃-Z-CR^{I}₄=CR^{I}₅R^{I}₆ (IA)
dans laquelle
R^{I}₁, R^{I}₂, R^{I}₃, R^{I}₄, R^{I}₅, R^{I}₆, identiques ou différents les uns des autres, sont un atome d'hydrogène ou des groupes alkyle en C₁-C₅ ;
Z est un radical cycloalkylène ou alkylène linéaire ou ramifié en C₁-C₁₈, renfermant éventuellement des atomes d'oxygène, de préférence au moins partiellement fluoré, ou un radical (per)fluoropolyoxyalkylène.

8. Elastomères fluorés selon la revendication 7, dans lesquels, dans la bis-oléfine de formule (IA), Z est un radical perfluoroalkylène en C₄-C₁₂ et R^{I}₁, R^{I}₂, R^{I}₃, R^{I}₄, R^{I}₅, R^{I}₆ sont un atome d'hydrogène.

9. Elastomères fluorés selon les revendications 7 à 8, dans lesquels, dans la bis-oléfine de formule (IA), Z est un radical (per)fluoropolyoxyalkylène de formule :
-(Q)ₚ-CF₂O-(CF₂CF₂O)ₘₐ(CF₂O)ₙₐCF₂-(Q)ₚ- (IIA)
dans laquelle :
Q est un radical alkylène ou oxyalkylène en C₁-C₁₀ ;
p vaut 0 ou 1 ;
ma et na sont des entiers tels que le rapport ma/na est compris entre 0,2 et 5 et que le poids moléculaire dudit radical (per)fluoropolyoxyalkylène est dans la plage de 500 à 10 000, de préférence de 1000 à 4000.

10. Elastomères fluorés selon les revendications 7 à 9, dans lesquels, dans la bis-oléfine de formule (IA), Q est choisi parmi les groupes suivants :
- CH₂OCH₂- ; -CH₂O(CH₂CH₂O)ₛCH₂-, avec s = 1-3.

11. Elastomères fluorés selon les revendications 7 à 10, dans lesquels la quantité dans la chaîne de motifs dérivés de la bis-oléfine de formule (IA) est dans la plage de 0,01 à 1,0 en moles.

12. Elastomères fluorés selon les revendications 1 à 11, dans lesquels la structure d'élastomère fluoré de base est choisie parmi :
(1) des copolymères à base de VDF copolymérisé avec au moins un comonomère choisi parmi des perfluorooléfines en C₂-C₈, de préférence le tétrafluoroéthylène (TFE), l'hexafluoropropène (HFP) ; des chloro- et/ou bromo- et/ou iodo-fluorooléfines en C₂-C₈, de préférence le chlorotrifluoroéthylène (CTFE) et le bromotrifluoroéthylène ; des éthers (per)fluoroalkylvinyliques (PAVE) CF₂=CFOR^{t}_{f}, dans lesquels R^{t}_{f} est un groupe (per)fluoroalkyle en C₁-C₆, de préférence un groupe trifluorométhyle, un groupe bromodifluorométhyle, un groupe pentafluoropropyle ; des éthers perfluoro-oxyalkylvinyliques CF₂=CFOX^{t}, dans lesquels X^{t} est un groupe perfluorooxyalkyle en C₁-C₁₂ renfermant un ou plusieurs groupes éther, de préférence un groupe perfluoro-2-propoxy-propyle ; des oléfines non fluorées en C₂-C₈ (Ol), de préférence l'éthylène et le propylène ;
(2) des copolymères à base de TFE copolymérisé avec au moins un comonomère choisi parmi : des éthers (per)fluoroalkylvinyliques (PAVE) CF₂=CFOR^{t}_{f}, dans lesquels R^{t}_{f} est tel que défini ci-dessus ; des éthers perfluorooxyalkylvinyliques CF₂=CFOX^{t}, dans lesquels X^{t} est tel que défini ci-dessus ; des fluorooléfines en C₂-C₈ renfermant des atomes d'hydrogène et/ou de chlore et/ou de brome et/ou d'iode ; des oléfines non fluorées en C₂-C₈ (Ol).

13. Elastomères fluorés selon la revendication 12, présentant les compositions monomères de base suivantes (en moles) :
| | |
|---|---|
| VDF | 45-85 |
| HFP et/ou PAVE | 0-45 |
| TFE | 0-30 |
| MOVE plus de 10 et jusqu'à 45, de préférence jusqu'à 40 | |
| Ol | 0-40, |
la somme de HFP+PAVE+MOVE étant d'au plus 45 %.

14. Elastomères fluorés selon les revendications 12 à 13, durcissables par la voie peroxydique, éventuellement en présence de petites quantités d'une bis-oléfine telle qu'indiquée ci-dessus, lesdits élastomères fluorés renfermant de préférence des sites réactifs, c'est-à-dire de l'iode et/ou du brome dans la chaîne, de préférence de l'iode, et/ou utilisant un agent de transfert iodé et/ou bromé.

15. Elastomères fluorés selon la revendication 12, présentant les compositions monomères de base suivantes (en moles) :
| | |
|---|---|
| TFE | 50-85 |
| PAVE | 0-50 |
| MOVE plus de 10 et jusqu'à 50, de préférence jusqu'à 40 | |
| Ol | 0-40, |
la somme de PAVE+MOVE étant d'au plus 50.

16. Elastomères fluorés selon les revendications 11 à 13, durcissables par la voie ionique, présentant les compositions suivantes (exprimées en moles) :
lorsque l'élastomère fluoré est utilisé pour la préparation de joints d'arbre ou de tuyaux de combustible :
| | |
|---|---|
| VDF | 30-47 |
| HFP | 20-40 |
| PAVE | 0-17 |
| TFE | 10-30, |
| MOVE plus de 10 et jusqu'à 20, | |
la somme PAVE+MOVE étant inférieure ou égale à 20 % en moles.

17. Utilisation d'élastomères fluorés selon les revendications 1 à 16 pour la préparation de joints toriques, de joints d'arbre et de tuyaux de combustible.
